(19) **Europäisches Patentamt**

**European Patent Office**

**Office européen des brevets**

(11) **EP 1 070 267 B1**

(12) **EUROPEAN PATENT SPECIFICATION**

(45) Date of publication and mention
of the grant of the patent:
**28.12.2005 Bulletin 2005/52**

(21) Application number: **98915427.3**

(22) Date of filing: **09.04.1998**

(51) Int Cl.⁷: $G01V\ 1/28$, G01V 11/00

(86) International application number:
**PCT/US1998/007119**

(87) International publication number:
**WO 1999/053342 (21.10.1999 Gazette 1999/42)**

(54) **ENFORCING CONSISTENCY IN GEOSCIENCE MODELS**

KONSISTENZERZWINGUNG GEOLOGISCHER MODELLE

RECHERCHE DE COHERENCE DANS DES MODELES GEOSCIENTIFIQUES

(84) Designated Contracting States:
**DE FR GB NL**

(43) Date of publication of application:
**24.01.2001 Bulletin 2001/04**

(73) Proprietor: **SCHLUMBERGER TECHNOLOGY CORPORATION**
**Austin Texas 78720-0015 (US)**

(72) Inventors:
 • **ASSA, Steven, B.**
 **Austin, TX 78753 (US)**
 • **RAMSHORN, Christoph, C.**
 **Austin, TX 78703 (US)**

(74) Representative: **Stoole, Brian David**
**Geco-Prakla Technical Services Inc,**
**Patent Department,**
**Schlumberger House,**
**Buckingham Gate**
**Gatwick, West Sussex RH6 0NZ (GB)**

(56) References cited:
**WO-A-97/38330        GB-A- 2 309 562**
**US-A- 4 991 095        US-A- 5 229 976**

 • **BODE T ET AL: "FIRST EXPERIENCES WITH GEOSTORE, AN INFORMATION SYSTEM FOR GEOLOGICALLY DEFINED GEOMETRIES"** LECTURE NOTES IN COMPUTER SCIENCE, February 1994, pages 35-44, XP002064462

## Description

## Background

This invention relates to enforcing consistency in geoscience models.

Geologists, geophysicists and petroleum engineers use models, including computerized models, of the earth's shell to plan exploration and production of hydrocarbons and, to a lesser extent, other minerals. As hydrocarbons become more and more scarce, the accuracy of the computerized models becomes increasingly important to limiting the cost of locating and producing hydrocarbons and the associated cost of hydrocarbon products, such as gasoline and heating oil.

Interpretation of log data and seismic surveys produces a description of the structure and properties of rocks in the subsurface, as well as of their fluid and gas contents. Different measurements provide complimentary and overlapping information which has to be integrated to form a consistent model of the subsurface.

An article by Thomas Bode, Martin Breunig and Armin B. Cremers entitled "First Experiences with GEOSTORE, an Information System for Geologically Defined Geometries," Lecture Notes in Computer Science, February 1994, pages 35-44, XP002064462, describes a geological application which checks "spatial integrity constraints," including "local and global geological relationships," "metric relationships," "spatial order relationships," and "the description of geometry." United States Patent 5,229,976 describes an application which includes a "preconditioning" step to correct "Small defects common in digital line data." The application truncates or projects each digital element until every digitized element terminates on another without crossing it.

## Summary

In general, in one aspect, the invention features a method for adjusting geological data representing a geoscience model of the characteristics of a geological region, the being implemented in a programmed computer having a processor, a data storage system, at least one input device, at least one output device. The method and data are stored on computer-readable media. The geological data include one or more features, where each feature includes a shape, a topology and one or more attributes. The improvement provided by the method of the invention includes the steps of (1) defining one or more detection rules and one or more resolution rules and associating one or more of the detection rules and resolution rules to one or more of the features, where there is a correspondence between the detection rules and the resolution rules; (2) adjusting the model; (3) detecting an inconsistency by applying the detection rules associated with the one or more of the features impacted by the adjustment of the model; and (4) resolving the inconsistency by applying the corresponding resolution rule.

Implementations of the invention may include one or more of the following. Detecting inconsistency may include detecting a potential inconsistency. Resolving inconsistency using the resolution rule may include one or more of the following: (1) flagging an inconsistency for later resolution; (2) removing the inconsistency; (3) instructing a system responsible for maintaining the geoscience model how to remove the inconsistency; or (4) reporting the inconsistency to an application. Defining a detection rule may include defining a correct range of a characteristic of a feature.

In general, in another aspect, the invention features a computer system for adjusting geological data to enforce consistency within the geological data. The geological data represents a geoscience model of the characteristics of a geological region and includes one or more features, where each feature has a shape, a topology and one or more attributes. The computer system includes a processor, a data storage system, at least one input device and at least one output device. The improvement includes a means for defining one or more detection rules and associating a corresponding resolution rule to each such detection rule and associating one or more detection rules with at least one feature; a means for adjusting the model; a means operable to (for each feature impacted by the adjustment) detect an inconsistency by applying the detection rule associated with the one or more impacted features; and a means for resolving the inconsistency by applying the corresponding resolution rule.

Implementations of this aspect of the invention may include one or more of the following. The means operable to detect inconsistency may include means for detecting a potential inconsistency. The resolving inconsistency means may include one or more of the following: (1) means for flagging an inconsistency for later resolution, (2) means for removing the inconsistency, (3) means for instructing a system responsible for maintaining the geoscience model how to remove the inconsistency, or (4) means for reporting the inconsistency to an application. The means for defining a detection rule may include means for defining a correct range of a characteristic of the feature.

In general, in yet another aspect, the invention features a computer program, residing on a computer readable medium, for adjusting geological data representing a geoscience model of the characteristics of a geological region to enforce consistency in within the geological data. The geological data includes one or more features with each feature including a shape, a topology, and one or more attributes. The improvement includes instructions for causing the computer, which includes a processor, a data storage system, at least one input device and at least one output device, to (1) define at least one detection rule and a resolution rule corresponding to each detection rule; (2) associate one or more detection rules to at least one feature; (3) adjusting the model; (4) detect an inconsistency by applying the detection rule associated with one or more of the features impacted by the adjustment to the model; and (5) resolve the inconsistency by applying the corresponding resolution rule.

Implementations of this aspect of the invention may include one or more of the following. The instructions for causing the computer to detect the inconsistency may include instructions for causing the computer to detect a potential inconsistency. The instructions for causing the computer to resolve the inconsistency may include one or more of the following: (1) instructions for causing the computer to flag an inconsistency for later resolution; (2) instructions for causing the computer to remove the inconsistency; (3) instructions for causing the computer to instruct a system responsible for maintaining the geoscience model how to remove the inconsistency; or (4) instructions for causing the computer to report the inconsistency to an application. The instructions for causing the computer to define a detection rule may include instructions for causing the computer to define a correct range of a characteristic of a feature.

Description

Fig. 1 is a block diagram.
Figs. 2a-c, 3a-c, 4a-b, 5a-c, 6a-c, 7a-c, 8a-e, 9a-b, 10a-b, 11a-b, 12a-b, 13a-b, 14a-c, 15a-f, 16a-c, and 17a-d are examples of items to be modeled.
Fig. 4c is a topology graph.
Fig. 18 is a flow chart.

Simulations may be used to verify interpretations, an approach which is called simulation-based interpretation ("SBI"), described in co-pending patent application serial number _____, entitled "Performing Geoscience Interpretation with Simulated Data", respectively, incorporated by reference.

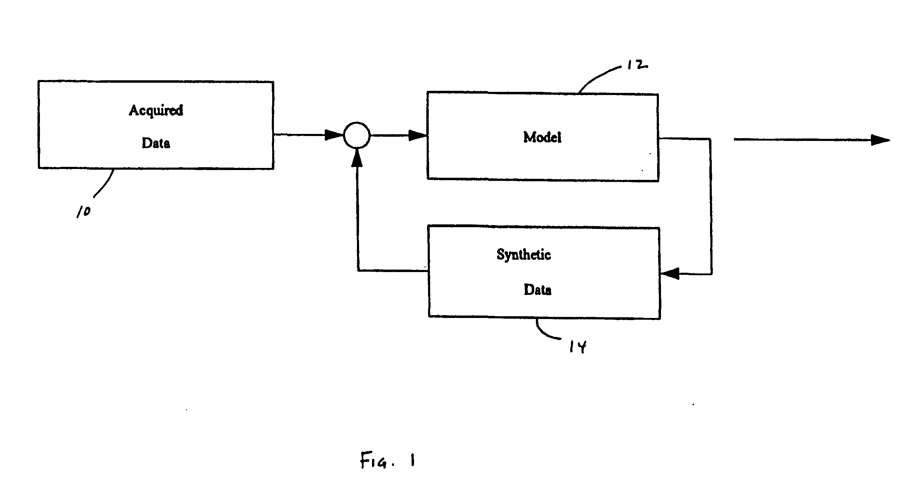

Simulation-based interpretation, illustrated in Fig. 1, begins by gathering acquired data 10 from the geological structures being modeled. The acquired data is interpreted, and the resulting interpretation is captured as a geoscience model 12. The model is then tested by simulating the original acquisition experiment to produce synthetic data 14. Differences between the synthetic data 14 and the acquired data 10 are determined and used to adjust the model. Repeated iterations of these steps may cause a model to converge toward a consistent model in which the differences between the synthetic and the acquired data are reduced.

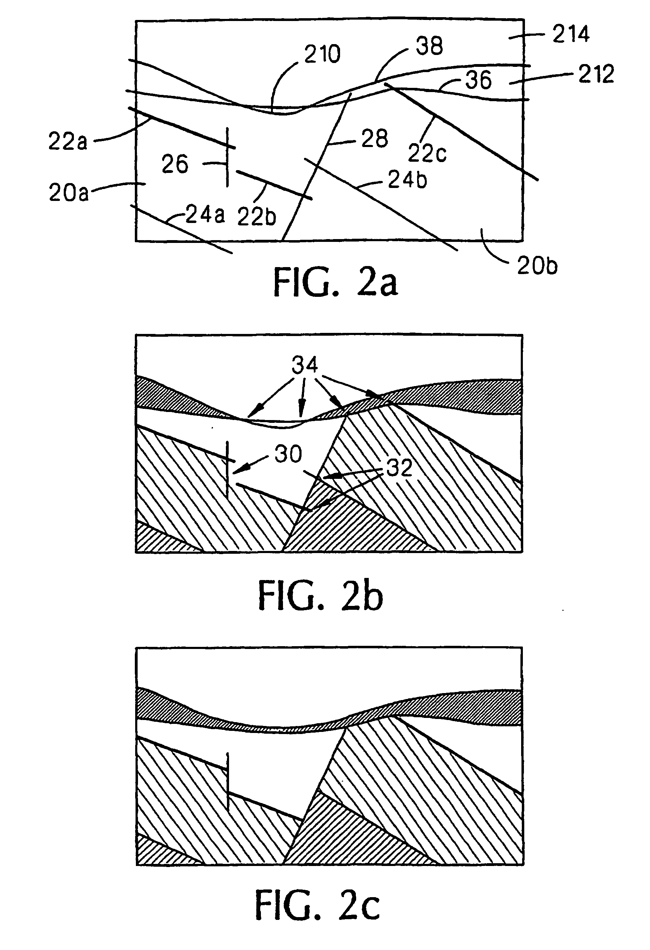

Building 3D geometric models of geological structures is not easy because it involves modeling irregular shapes with complex spatial relationships. Irregular Space Partition (ISP) modeling represents geological bodies and their spatial relationships and defines a region of interest whose internal structure is built from surfaces such as horizons and faults that subdivide the region of interest and form sub-regions (such as geologic layer 20a, 20b shown in Fig. 2a). The notion of a region is independent of dimension; a 3D region is a solid object, a 2D region is an area, etc. An ISP model explicitly stores the spatial relationships of all the subregions contained in it.

An extension to ISP modeling, feature-based modeling, makes it possible to define geometric objects ("features") that consist of one or more pieces that do not have to be topologically connected. For example, all the features in Fig. 2a such as horizon 22a, 22b, 22c, horizon 24a, 24b, both faulted by faults 26 and 28, and layer 20a, 20b, disconnected by fault 28, are treated as single objects, even though they are disconnected.

A wide variety of measurements, processing methods and simulations can create a model that accurately describes a subsurface region. This model can describe a geometry of subsurface structures, a topology relationship among their components, and material properties of subsurface regions such as layers and reservoir compartments. The model may be general and sharable by different applications. Since subsurface structures can be large and complex, the model may support automated, high-level model editing.

Building three-dimensional geometric models of geological structures is complicated by the fact that input geometry is used to build a geoscience model are frequently not "clean." For example, as shown in Fig. 2b, fault ties, which are intersections of horizons and faults, may be missing 30, horizons may cross faults 32, or horizons may penetrate each other 34.

The stratigraphic and structural characteristics of specific features are often known. For example, it may be known that fault 28 in Fig. 2a truncates and offsets horizon 22a, 22b, 22c and horizon 24a, 24b, which are older. It may be known that fault 28 is in turn truncated by the younger erosional contact 36. It may also be known that horizon 22a, 22b, 22c and horizon 24a, 24b separate younger layers above from older layers below. Additionally, it may be known that the layer between erosional contact 36 and another erosional contact 38 has a certain minimal thickness.

Exploiting such characteristics can help applications to automatically build correct, clean models or to check an interpretation for consistency. When building irregular spaced partition models of geological structures, three geometrical conditions are encountered that create inconsistencies, as shown in Figs. 2a and 2b. Generally, the three types of inconsistencies are shape, material property, and topology inconsistencies. The inconsistencies can occur in the seed and in the background (both terms are defined below).

A geometric component can be too large, such as horizon segment 22a, too short, such as horizon segment 22b (with respect to fault 26), or have the wrong shape, such as erosion contacts 36 and 38. Components that are too large can also be considered to contain excessive pieces, such as the piece of horizon segment 22a extending to the right of fault segment 26. Since it cannot be determined by geometrical analysis only whether or not those conditions constitute an error, additional constraints are necessary to express the structure that is intended to be built. The rule system uses these additional constraints to automatically build correct, clean models such as that depicted in Fig. 2c.

The formulation of a geological rule requires the analysis of whether to constrain the shape, the topological relationships, the attributes of an object, or a combination of all three. The system separates the representations of shape, topology, and properties of geometric objects for flexibility and to make extensions straightforward.

Shapes can comprise any of a combination of geometry primitives including lines, planes, free-form surfaces, and 3D solids. The shape of a geometry primitive is defined to be the set of points it occupies in space. The primary surface shapes used to build geological models are represented by grids and triangle meshes.

Parametric shape representations may be used to provide a wide range of different shapes. A parametric shape representation is provided by a parametric equation which maps variables in parameter space to image space. For example, consider a regularly gridded surface of N by M nodes with a spacing of d in both directions, and node (0,0) located at [x0, y0, f(0,0)]. The surface's shape is the set of points given by the function:

$$x = x0 + n\,d$$

$$y = y0 + m\,d$$

$$z = f(0,0)$$

where n and m are parameters defined in the range from 0 to N and 0 to M, respectively, and f(n,m) is the value of z at node (n,m).

These equations define the mapping from a parameter space where n and m are defined, to the image space where [x, y, z] coordinates are defined. For every (n,m)-pair there is a unique value of [x, y, z]. If a continuous interpolation function is defined to obtain z-values for fractional values of n and m, the surface number of points on the surface is infinite and the surface is within its boundaries everywhere defined.

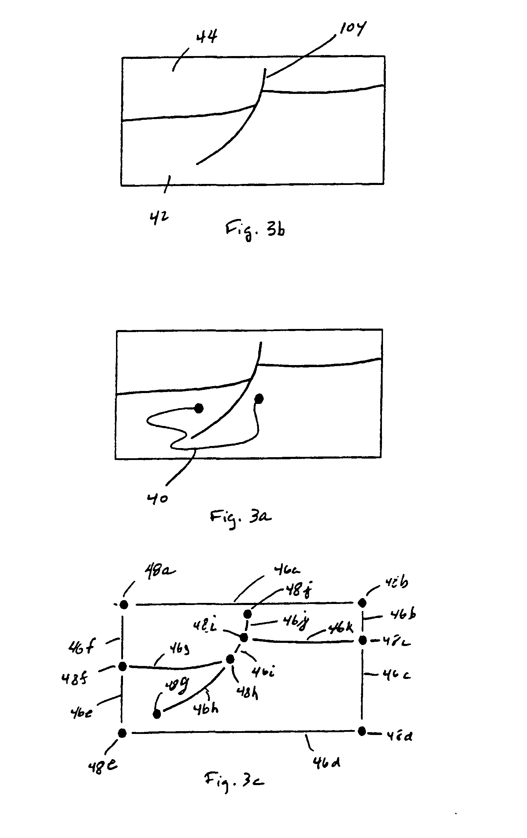

Topology, at a low level, includes representations within a geometric model of a collection of 0- to 3-dimensional objects (points, curves, surfaces, and volumes), called cells, whose topological relationships are explicitly represented. Figs. 3a-c depict the concept of a cell.

A cell is defined as a closed but not necessarily bounded path-connected region of fixed dimension. A region is closed if its point set encloses its boundaries. A region is bounded if it is of finite extent. Path-connected means that any two points in a region can be connected by a path of finite length which never leaves the region, as shown by path 40 in Fig. 3a. The fixed dimension restriction implies a cell is a surface or a volume, but is not a surface plus a volume. A surface embedded in a volume is a set of two cells. As a point-set, two distinct cells can overlap along a common boundary or not at all.

In Fig. 3b areas 42 and 44 are distinct cells, as are the line segments between intersection points 46a-k, as are the intersection points 48a-j, as shown in Fig. 3c. The information associated with the cells of a geometric model fully describe the model's geometry and topology. Consequently, the geometric model is itself represented as a cellular model.

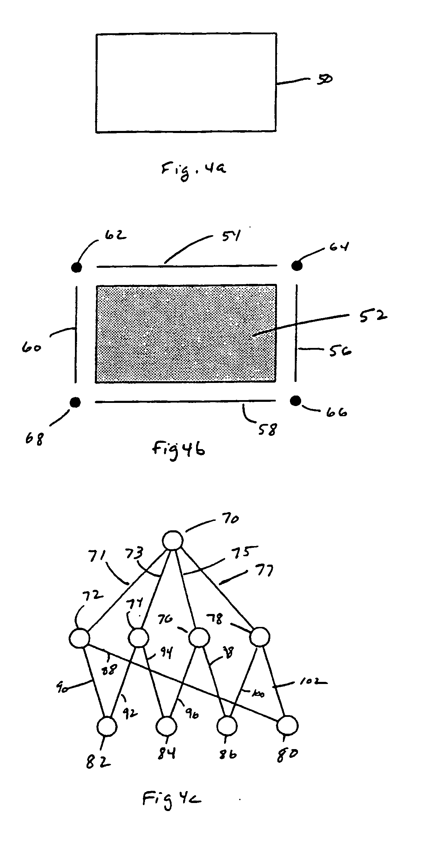

The topology of a geometric model is the set of all cell-cell connectivity relationships. These can be represented in a graph in which the arcs of the graphs represent connectivity and the nodes represent cells, as shown in Figs. 4a-c. Box 50, shown in Fig. 4a, comprises two dimensional cell 52, one dimensional cells 54, 56, 58, and 60, and zero dimensional cells 62, 64, 66, and 68, as shown in Fig. 4b.

In a cellular model, cells can have two roles: as a boundary of a region of higher dimension; and as a region of higher dimension bounded by cells of lower dimension. Cells of dimension n are connected to cells of dimension less than n and vice versa. Most frequently, n-dimensional cells are bounded by cells having dimension n-1. It is possible for n-dimensional cells to be connected to cells of dimension less than n-1 (e.g., a borehole represented as a one-dimensional curve in a three-dimensional volume). In a topology graph, illustrated in Fig. 4c, cells are represented by circles and connections between cells are represented by arcs. Three dimensional cell 52, represented by circle 70, is connected to one dimensional cells 54, 56, 58, and 60, represented by circles 72, 74, 76, and 78, respectively. The connection is represented by arcs 71, 73, 75, and 77. One dimensional cell 54 is connected to zero dimensional cells 62 and 64, represented by circles 80 and 82, respectively. The connections are represented by arcs 88 and 90. One dimensional cell 56 is connected to zero dimensional cells 64 and 66, represented by circles 82 and 84, respectively. The connections are represented by arcs 92 and 94. One dimensional cell 58 is connected to zero dimensional cells 66 and 68, represented by circles 84 and 86, respectively. The connections are represented by arcs 96 and 98. One dimensional cell 60 is connected to zero dimensional cells 68 and 62, represented by circles 86 and 80, respectively. The connections are represented by arcs 100 and 102.

The most frequent representation in ISP models for boundary relationships for geological cells is that: endpoints bound curves; curves bound surfaces; and surfaces bound subvolumes. For example, a surface can bound a subvolume, but can itself be bounded by a set of curves. The one dimensional cells 54, 56, 58 and 60 in Fig. 4b are both subregions, bounded by points 62, 64, 66, and 68, and boundaries of subregion 52. Cells that are contained in higher-dimensional cells but do not split them, such as fault 104 in Fig. 3b, are said to be "embedded."

The operation of combining two geometric objects is called classification. Each geometric object is represented by a set of connected cells, called a cell complex. As the cell complexes are classified against each other, new cells may be generated by splitting existing cells.

Classification is executed in four steps: (1) compute intersections of shapes and generate cells representing the intersection geometries (such as the intersection points in Fig. 3c); (2) embed lower-dimensional cells of complex 1 in the higher-dimensional cells of complex 2 that they overlap; (3) split cells that are subdivided by lower-dimensional cells; (4) update the material properties of all affected cells (material properties are discussed below).

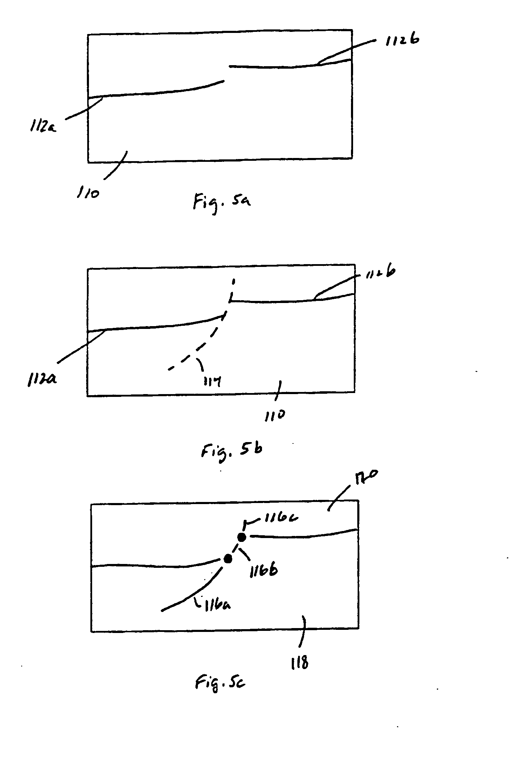

For example, assume an earth model contains a layer 110 and a faulted horizon 112a, 112b, as shown in Figs. 5a-c. Initially, there is only one layer in the model because the bed boundary geometry with its gap does not subdivide layer 110. During classification, a fault 114 first gets split by horizon cells 112a and 112b, as shown in Fig. 5b, after which fault cells 116a, 116b, 116c get embedded in layer 110, as shown in Fig. 5c. Then layer 110 is split into layers 118 and 120, as shown in Fig. 5c. Fault cells 116a and 116c are embedded into layers 118 and 120, respectively. Embedding of fault 116a, 116b, 116c into layer 110 occurs prior to splitting.

Classification is discussed in detail in co-pending application serial number _____, entitled "Modeling Geological Structures and Properties", incorporated by reference.

Attributes, or properties, are assigned to topological entities in a cellular model, where topological entities correspond to nodes or arcs in the model's topology graph. One topological entity can be assigned multiple properties.

While the primary use of the property system is to handle material properties, other properties such as geological age can be represented equally well. The property system has four important concepts.

First, properties can be tied to features and cells and other geometric entities.

Second, property representations can be arbitrarily chosen to be constant values, pointers to sets of values, or pointers to functions. Those functions typically take a point either in parameter space or in image space and return a material property value. Alternatively, they can return a property gradient or some other derived value.

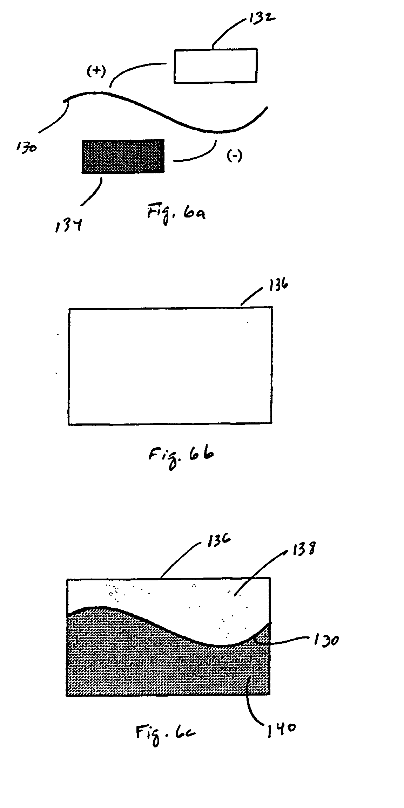

Third, properties can be oriented. A surface in 3-space, for example, can have different properties on either side. In Figure 6a, for example, a surface 130 in 3-space is shown with two different material properties 132 and 134, one for each side of the surface.

Fourth, changes to a model's topology graph (called "events") trigger functions (called "event callbacks") that can alter property assignments. Typical events include splitting and merging cells, and embedding of lower dimensional cells. In Figs. 6a-c, as the surface 130 is inserted into a volume 136, the volume 136 is subdivided, its 3D cell is split, and two new subregions 138 and 140 are created. In this example, a split event callback propagates the curve's oriented material properties to the appropriate subregions. Consequently, the sub-region 138 above the curve takes the material property 132 associated with the top of the surface and the sub-region below the surface 140 takes the material property 134 associated with the bottom of the surface.

An application is able to keep a model's material properties assigned correctly during classification because the callback mechanism notifies the application each time a cell with a material property changes its topological state. Material property representations are discussed in detail in co-pending application serial number _____, entitled "Modeling Geological Structures and Properties", incorporated by reference.

While cellular models can represent geometries of arbitrary complexity, it is cumbersome to build and edit them, and to keep track of material property assignments as cells are added, split, merged, and deleted as side effects of geometric operations. Cellular modeling is extended with the concept of features.

Features can be thought of as groups of one or more cells with a number of important conceptual properties (among others; see co-pending application serial number _____, entitled "Modeling Geological Structures and Properties", incorporated by reference, for a full discussion of features).

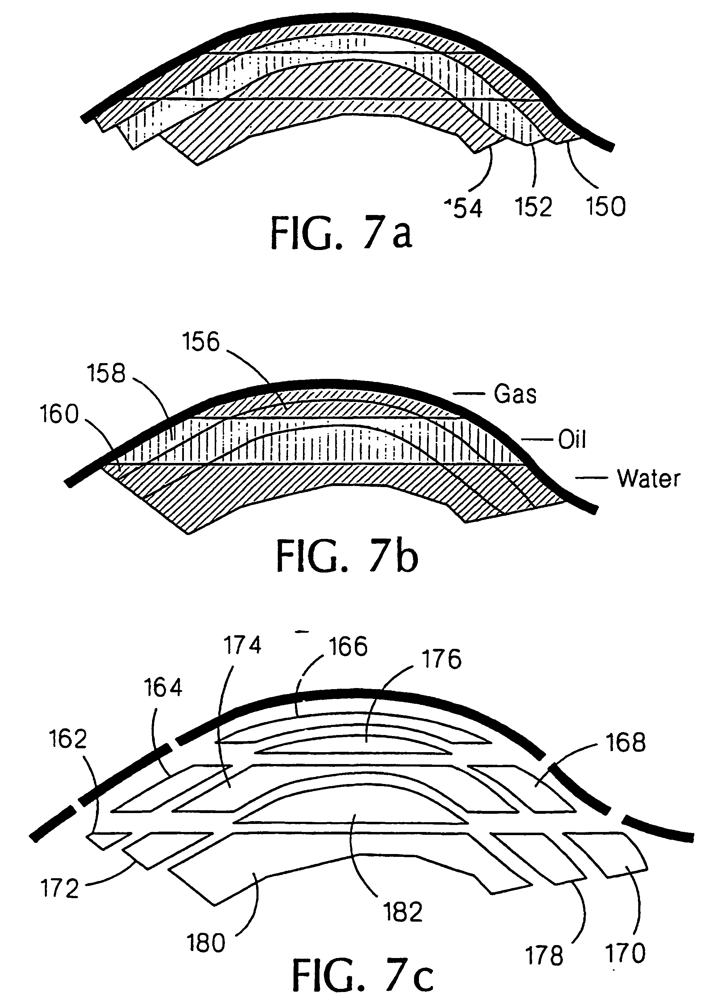

First, features preserve their point-set. The bed features 150, 152, and 154, shown in Fig. 7a, each continue to represent their entire respective beds although the gas, oil, and water layers 156, 158, and 160 have split feature 150 into five cells 162, 164, 166, 168, and 170, feature 152 into four cells 172, 174, 176 and 178, and feature 154 into two cells 180, 182, as shown in Figs. 7b and 7c.

Second, a feature may be discontinuous, that is, a feature may contain unconnected cells. For example, layer feature 20a and 20b in Fig. 2a comprises two unconnected cells 20a and 20b.

Third, features may overlap as point sets. Individual cells may belong to more than one feature. For example, bed feature 150's cells, shown in Fig. 7c, also belong to the water, oil, and gas features 156, 158, and 160.

Fourth, features can carry properties that are inherited by their cells. What properties a cell has depends on the context in which its properties are evaluated.

Fifth, features can have 'active' and 'inactive' cells. Active cells can change their connectivity whereas inactive cells cannot. When features are combined to form a larger geometric model, only their active cells change topological state. Inactive cells are created as parts of features and are trimmed off, i.e., removed from the active part of the model, during model building. An application of this mechanism is the modeling of eroded horizons (often referred to as "ghost surfaces") and layers.

Sixth, a model may contain active and inactive features. Features are active by default and may contain active and inactive cells. Certain operations, such as dissociating a feature from a model, make a feature inactive. Inactive features only contain inactive cells, some of which may be copies of active cells. Inactive features cannot change their connectivity.

Rule based modeling is an extension of feature-based modeling.

Feature-based modeling can represent the inconsistencies that are generated when constructing a geometric model but cannot automatically report or resolve them. Structurally correct geological models are automatically built by exploiting rules based on feature properties.

The properties and structural characteristics of a feature can be translated into specifications that state which values of feature properties and which spatial relationships between features are considered correct. Such specifications are called rules. Rules apply to properties such as formation age or whether a surface represents a bed boundary or a fault.

Organizationally, a rule consists of a detection method and a resolution method. The detection method's task is to recognize when an inconsistency has arisen. The resolution method's task is to remove the inconsistency, to instruct the system how to remove the inconsistency, or to report the inconsistency to the application. Detection is automatic, in the sense that application-provided detection methods are invoked at the appropriate time to verify consistency. Resolution is performed at the conclusion of the operation giving rise to the violations, in the sense that the detection method calls a specific resolution method to resolve a particular violation. In certain cases, resolution may require complex human input, e.g, instructions on how to tie a bed boundary to a fault.

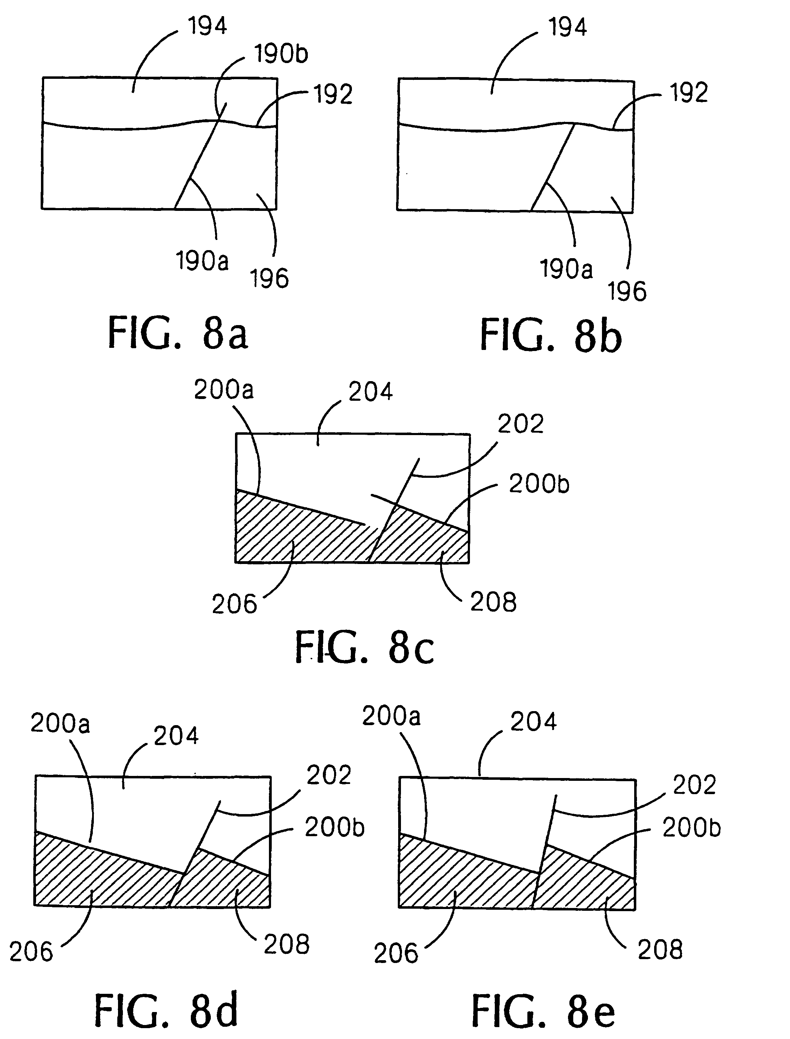

For example, when a fault 190a, 190b is classified, it should be truncated by an erosional surface 192, as shown in Fig. 8a. Instead, the fault extends across the erosional surface. An application may assign the following rule to each subvolume:

> Formation age rule (detection): The age of any point in a subvolume is bounded above and below by the age of the erosional or depositional surfaces that bound the subvolume.

> Formation age rule (resolution): Remove any surface cell violating the age bound.

Assume that all points along erosional surface 192 are of fixed age e. Suppose fault 190a, 190b is of constant age f and that f > e, i.e., that the fault is older than the erosional surface. During classification, the fault will be split along erosional surface 192 into fault cells 190a and 190b. The splitting does not affect the age assignment, so both parts are of age f. An inconsistency occurs with respect to the embedding of fault cell 190b in the upper subvolume 194, because the age of the fault is greater than the age of the erosional layer, which is in turn greater than the age of layer 194. Thus, the age of fault cell 190b is greater than the age of layer 194, which violates the formation age rule. In contrast, fault cell 190a's embedding in layer 196 is consistent because the age of the fault is greater than the age of the erosional surface and the age of layer 196 is greater than or equal to the age of the erosional surface. Following the rule's resolution strategy the inconsistency is resolved by removing fault segment 190b from the model as shown in Fig. 8b.

Inconsistent structural properties can also be detected and resolved, as shown in Fig. 8c (here, the age relationships are assumed to be everywhere consistent). Horizon 200a, 200b is offset by fault 202 but the horizon and fault geometries do not match exactly. Specifically, there is a gap between horizon cell 200a and fault 202 and horizon cell 200b crosses fault 202. The corresponding connectivity rule is defined as follows.

> Connectivity rule (detection): A bed boundary must be connected to distinct subvolumes.

> Connectivity rule (resolution): Ask how to extend the surface to subdivide the subvolume containing it.

Since horizon 200a, 200b is a bed boundary, each piece of it should separate two subregions. Horizon cell 200a should separate subregions 204 and 206 and horizon cell 200b should separate subregions 204 and 208. Horizon cells 200a and 200b each create an inconsistency, because each fails to subdivide the model. Note that although fault 202 does not subdivide subvolume 204 either, this is not an inconsistency: a fault can terminate (or "die out") anywhere in a layer.

Several forms of resolution are possible. Since horizon cell 200a is in close proximity to fault 202, one form of resolution is to extend horizon cell 200a to match up with fault 202 and remove from the model the portion of horizon cell 200b extending to the left of fault 202, as shown in Fig. 8d. Another possibility is to rotate or shift fault 202 to match horizon cells 200a and 200b, as shown in Fig. 8e.

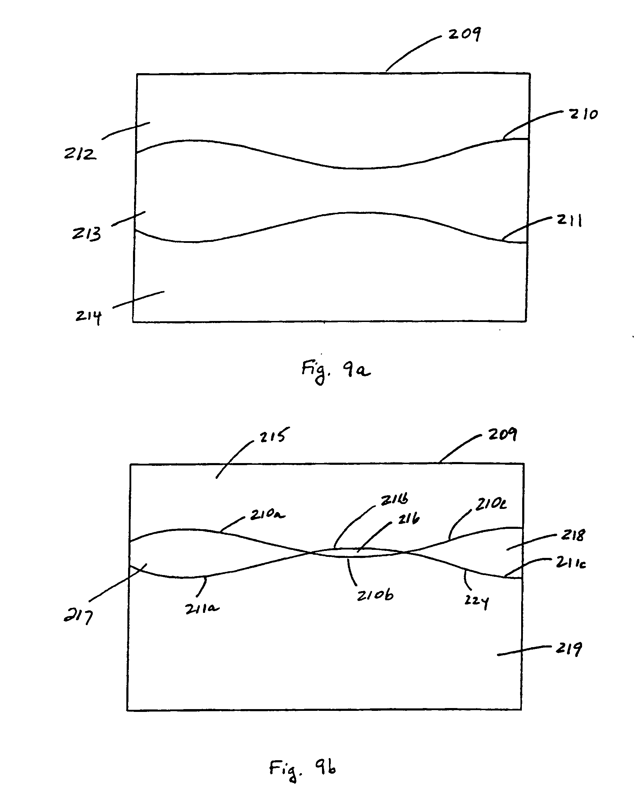

Inconsistencies in shape can also be detected and resolved. For example, suppose that a region-of-interest 209 is divided by surfaces 210 and 211 into three layers 212, 213 and 214, as shown in Fig. 9a. Suppose that the user wishes to move surface 211 to a new position close to surface 210, but accidently moves surface 211 so that it overlaps surface 210, as shown in Fig. 9b. This might happen because of the granularity of the device, such as a mouse, being used to move the surface, because of the inability of the user to control the moving device or for some other reason.

The movement of surface 211 occurs in two steps. In the first, surface 211 is dissociated from the region of interest and sub-regions 213 and 214 are merged. In the second step, surface 211 is classified into the region of interest. The classification causes sub-region 212 to be split into two sub-regions 215 and 216, and causes the sub-region which was the merger of sub-regions 213 and 214 to be split into three sub-regions: 217, 218 and 219.

Sub-region 212 is split by invoking a split callback. The callback processes the following detection method and resolution method:

Small volume rule (detection): A child subvolume of a split of a parent subvolume must have at least a predefined percentage of the volume of the parent subvolume.

Small volume rule (resolution): Dissociate one of the surfaces bounding the child subvolume.

In the example, subvolumes 217 and 218 are found to have a volume above the "predefined percentage" of the volume of the subvolume that was the merger of volumes 213 and 214. When the volume of subvolume 215 is compared to volume of subvolume 212, on the other hand, it is found to violate the small volume rule.

When surface 211 was classified into the position shown in Fig. 9b, surfaces 210 and 211 were split into three cells each, 210a, 210b, 210c and 211a, 211b, 211c, respectively. The resolution method is to delete one of the two surface cells, 210b and 211b, bounding subvolume 216. Assume that the application chooses to dissociate surface 211b. In that case, subvolume 216 is merged into subvolume 215.

A variation on the "small volume rule" may be necessary in some instances when two nearly identical surfaces are moved very close to each other but are still separated. This might happen, for example, when a user is trying to move one surface on top of another knowing that they are the same surface. In such a case, the volume of the subvolume between the two surfaces is very large, because the extent of the surfaces is very large, and the "small volume rule" would not have the desired effect. The variation on the detection method of the rule would determine the ratio of the surface area of a subvolume to its volume and require it to be below a predetermined value. In the example, the ratio would not be below the predetermined value and the resolution method would be invoked.

In the context of a classification involving rules, we call a feature that is being classified against a model a "seed" and the model before classification the "background." Using this terminology, a framework for rule-based modeling is defined that may include a number of components.

First, an expected value or range of values for a property may be specified. In Fig. 8a, the expected value of fault 190a's, 190b's age property is an age greater than the age of surface 192. The expected structural characteristic of surface 192 is that it is connected to two subvolumes 194, 196 and in particular is not a crack within a single subvolume.

Second, an inconsistency detection method is provided. This algorithm detects where properties are different from their expected values, or where topological relationships do not match structural characteristics. Geometric inconsistencies (e.g, subdivision of a volume into two parts with one part being very small; such as the "lens" 210 between layers 212 and 214 in Fig. 2a) or connectivity inconsistencies (such as horizon cell 200a and fault 202 in Fig. 8b) are the expected failure modes. The method is invoked whenever a background feature is split or is the target in an embed operation. The inconsistency detection method returns a status describing the type of inconsistency found, if any, and a list of seed and background features that are affected by the inconsistency.

Some inconsistencies cannot be fully detected during classification (see discussion of "potential inconsistencies" below). In these cases, the inconsistency detection algorithm may be automatically invoked after the classification has finished.

Third, an inconsistency resolution method is provided. This algorithm implements the strategy to resolve an inconsistency. The method returns a status and, optionally, a list of affected cells.

Inconsistency resolution has to be delayed until the classification has finished. This is the safest and most frequently used mode. It is believed that in the future the geometry engine will allow classification to be aborted before normal completion, which will allow some inconsistencies to be resolved during classification.

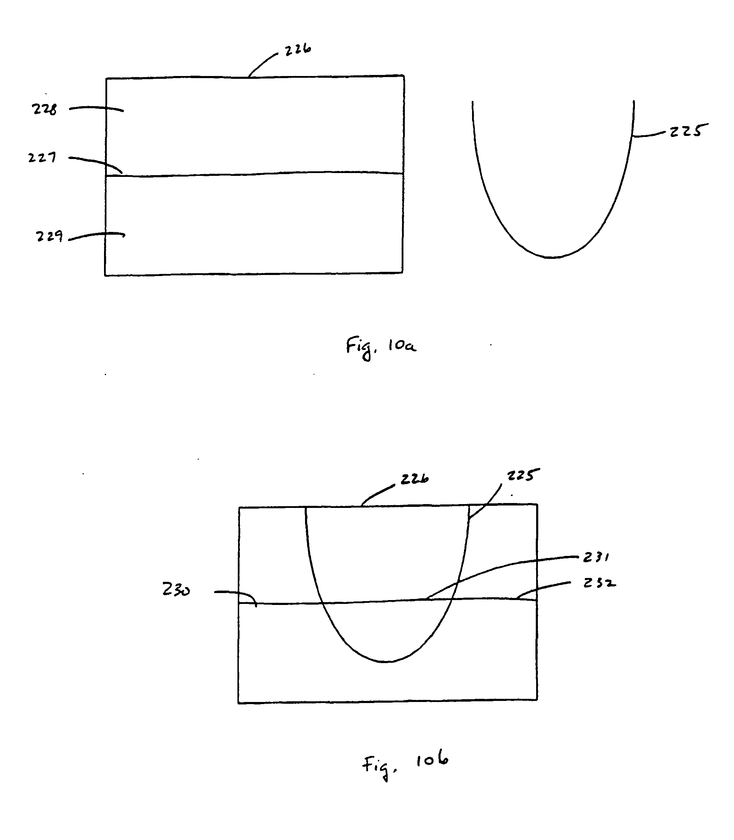

For example, suppose it is desired to classify erosional surface 225, shown in Fig. 10a, into volume of interest 226 which is already split by surface 227 into subvolumes 228 and 229, producing the volume shown in Fig. 10b. During the classification, it becomes clear that a portion of surface 227 violates the formation age rule, because the erosional surface is younger than surface 227. When the classification is complete, surface 227 has been split into three surface cells 230, 231 and 232, and the system can ascertain that cell 231 violates the formation age rule and dissociate it.

Fourth, an interface to the geometric modeling system is provided that specifies when detection and resolution algorithms are invoked, which parameters they are passed, and what they return.

The system assumes responsibility for invoking the detection and resolution method at appropriate moments. Each application provides its detection and resolution methods. Alternatively, the system may have a library of predefined detection and resolution methods, in which case the application must choose both a detection and a resolution method as a pair. It is possible to devise very complicated rules, but for practical use simple bounds checks are used for error detection.

Rules are associated with features. Preferably, the inconsistency detection and resolution algorithms are only invoked when a feature forms part of the background. Alternately, a rule can be attached at any time to a topologically stable volume (that is, a volume not undergoing a classification), causing the system to reevaluate the material, shape, and connectivity relationships of every cell connected to the volume. Of course, the corresponding seed features are accessible by those algorithms as they run. If a feature does not have an associated rule, any outcome of a classification with respect to the feature is considered correct.

The example of Fig. 8b shows that even seemingly simple rules can involve rather complex processing. However, regardless of a rule's complexity, it can be broken down into specification of what a consistent value is, analysis of consistency, and resolution of inconsistencies. Rules interact with unstable or stable volumes (that is, volumes undergoing classification and not undergoing classification, respectively) only in a limited number of ways, and methods of dealing with those interactions establish a framework which is suitable to handle arbitrary rule definitions.

As one example, if a surface (the "seed") is classified against a consistent and geologically correct model (the "background"), there are five types of inconsistencies that can occur. They are distinguished by the type of resolution method they require and by the point in the classification process they can be detected.

One kind of inconsistency is in the seed's material property assignment or assignments. To resolve such an inconsistency, one or more pieces of the seed must be removed. Such an inconsistency is detectable during embedding the seed. An example is the fault cell 190b in Fig. 8a. The age of seed fault cell 190b is inconsistent with the age of the layer 194 in which it is being embedded.

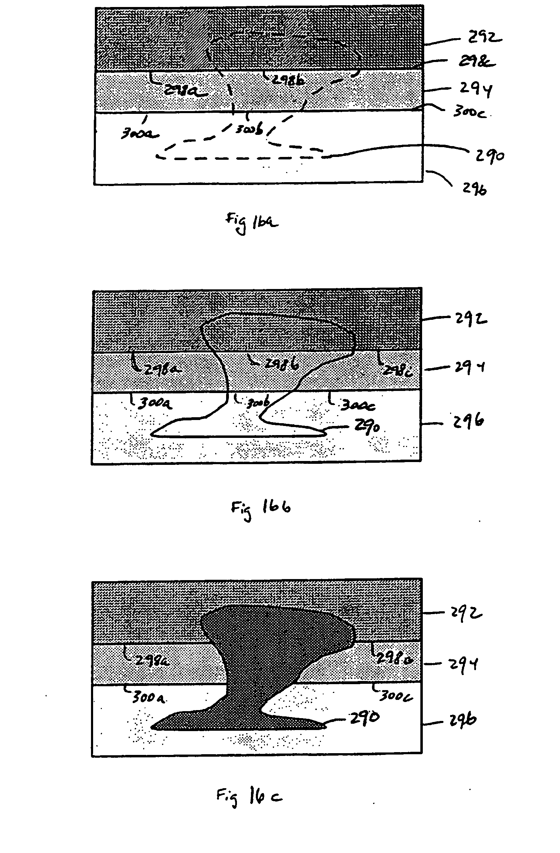

Another kind of inconsistency occurs in the material property assignment of the background. To resolve such an inconsistency, one or more pieces of the background must disappear, possibly as a result of a dissociate or a merge. The cells that disappear may not be defined until later in the seed feature classification, so their removal might not happen until the seed classification has ended. An example is discussed below in the discussion of Figs. 15a-f.

Another kind of inconsistency occurs in the seed's topology. To resolve a topological seed inconsistency, the geometry of the seed must be changed to obtain a specified topological structure. This is typically done by asking the user for help which the user provides by sketching a trajectory for extending the seed to its attachment site. Inconsistencies in a seed's topology can be detected during splitting of a subvolume by a seed or by the absence of splitting (see discussion of "potential inconsistency" below).

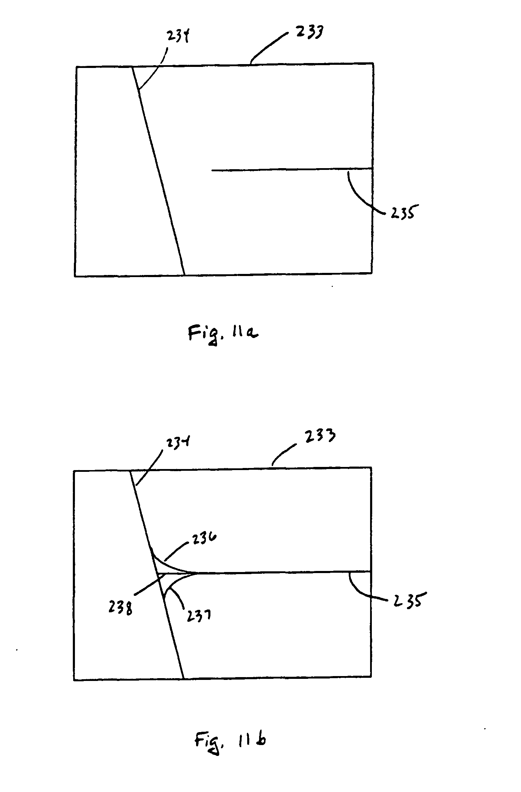

For example, suppose that region of interest 233 is split by a fault 234 and has classified against it surface 235, as shown in Fig. 11a. Suppose that the application has assigned to surface 235 the rule that it connects to all faults in the region of interest. The callback associated with the classification of surface 235 will observe that surface 235 does not satisfy that rule. The resolution method will then ask the user to define how surface 235 is to connect to fault 234. Three responses, 236, 237 and 238, of the infinite possible responses are illustrated in Fig. 11b.

Another kind of inconsistency occurs in the background's topology. To resolve such an inconsistency, the geometry of a background feature must change. This inconsistency can be detected during splitting of a subvolume by a seed or by the absence of splitting (again, see discussion of "potential inconsistencies" below).

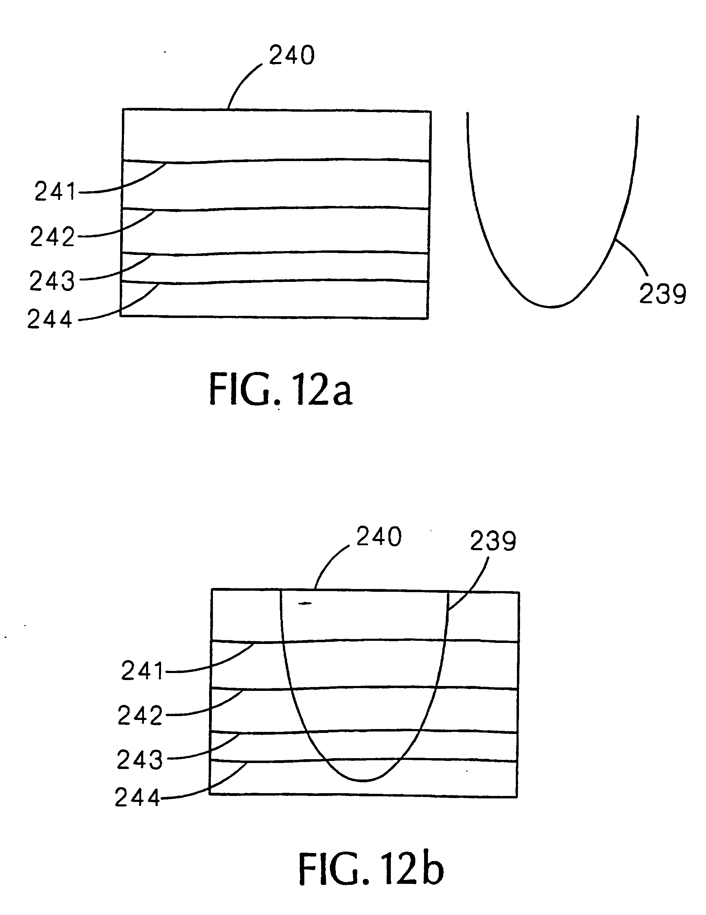

For example, suppose that it is desired to classify erosional surface 239 into volume of interest 240 which is split by depositional surfaces 241, 242, 243 and 244, all younger than erosional surface 239, as shown in Fig. 12a. The result, illustrated in Fig. 12b, shows violations of the formation age rule because segments of each depositional surface 241, 242, 243 and 244 are found within the younger volume enclosed by erosional surface 239. These segments must be dissociated as discussed above with regard to Figs. 10a and 10b.

This example illustrates another advantage of feature-based modeling. If this example were attempted with a modeling system that was not feature-based, cell-to-cell inconsistencies between the erosional surface and the depositional surfaces would have to be resolved each time the user stopped moving the erosional surface. In contrast, in feature-based modeling, the system need only remember that a feature (the erosional surface) is being moved across some other features (the depositional surfaces). It can defer the resolution of inconsistencies until later. When the classification is complete, the system knows that the erosional surface feature was classified against the depositional surface features and takes care of the cell-to-cell inconsistencies at that time.

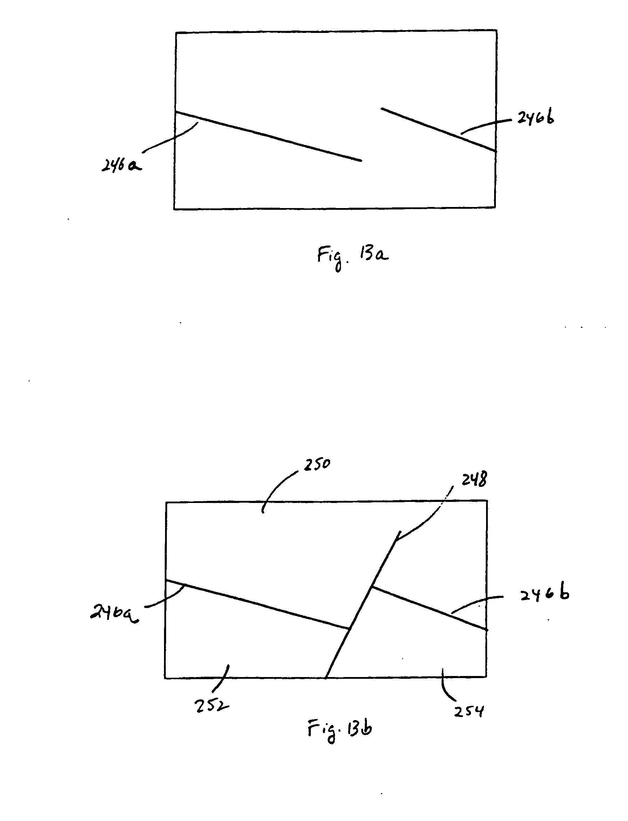

Another kind of inconsistency is a "potential" inconsistency. Some inconsistencies cannot be detected during classification. Consider the insertion of horizon 246a, 246b in Fig. 13a. Horizon 246a, 246b creates a topological seed inconsistency manifested by the fact that no splitting occurs. The inconsistency cannot be readily detected at embedding time because at that time it is not known whether or not a split will occur. Potential inconsistencies therefore are "flagged" during embedding. A subsequent split, such as is caused by the classification of fault 248 will split the region into subregions 250, 252, and 254, as shown in Fig. 13b, and clear the flag. Uncleared flags trigger a property consistency checking method after classification.

An application may elect to tolerate certain inconsistencies over the span of several classifications. The faulted horizon 246a, 246b in Fig. 13a, for example, creates a topological seed inconsistency because it fails to subdivide (split) the background. However, as fault 248 is inserted, the inconsistency is removed, as shown in Fig. 13b.

While in principle any inconsistency could be resolved after classification has finished, early detection is important because it can be used to reduce the amount of required processing. This is particularly relevant when costly material property computations are involved. The order in which surfaces are inserted to build a model also affects performance. This is now shown by reviewing two model building sequences involving an erosional surface.

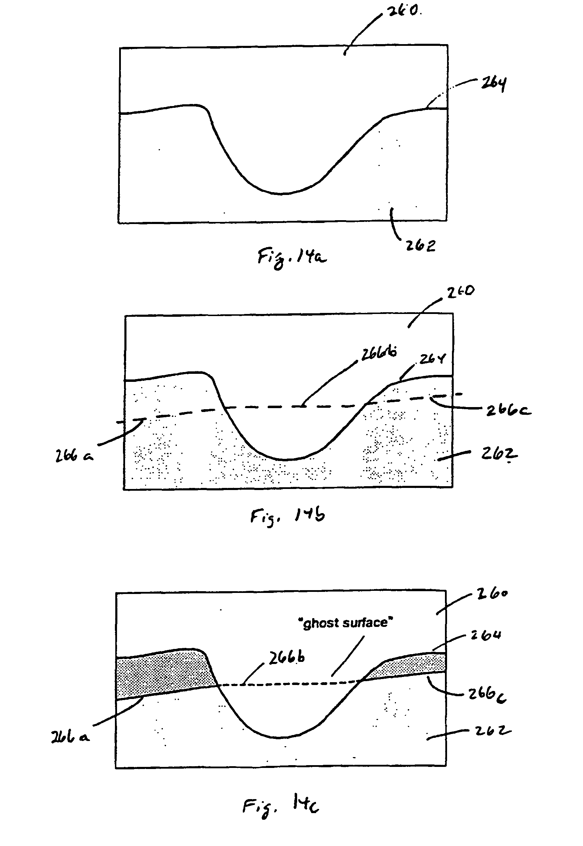

The first sequence, illustrated in Figs. 14a-c, is an example of a seed inconsistency. The background model consists of two subregions, an younger layer 260 and a older layer 262, separated by an erosional surface 264. Assume that the rule system has been set up like in the example described in the discussion concerning Fig. 8a. A horizon 266a, 266b, 266c is inserted such that it intersects erosional surface 264, as shown in Fig. 14b. Assume that horizon 266a, 266b, 266c is older than erosional surface 264. Horizon cell 266b embedded in layer 260 creates a seed inconsistency that can be resolved by removing horizon cell 266b, creating a "ghost surface" 266b, as shown in Fig. 14c.

The system does not abort a classification once it is launched, so the system is compelled to undo the split event. A major efficiency issue is minimizing changes to the model's material property state by the (temporary) split event. Alternatively, the system may abort the classification in order to block the completion of the split.

During classification, the embedding of horizon cell 266b in layer 260 splits layer 260 into a subregions above and below horizon cell 266b, triggering a split event callback to adjust material property assignments. The split event callback creates two material property files, one for each of the subregions on either side of horizon cell 266b. The two subregions above and below horizon cell 266b formed from layer 260 exist only temporarily, however, since the embedding of horizon cell 266b generated an inconsistency. After removal of horizon cell 266b, and merger of the two earlier-created material property files, layer 260's material property assignments will be identical to those before the classification. Therefore, temporarily changing layer 260's property assignment is a waste of time and system resources, such as disk space. The system prevents this by simply blocking property updates when a seed inconsistency has been detected.

The second sequence involves a background inconsistency. Consider a set of layers 270, 272, 274, shown in Fig. 15a, to which an erosional surface 236a-c is added, as shown in Fig. 15b. Assume that erosional surface 276a-c is younger than layers 270 and 272 but older than layer 274. Again, the Formation Age Rule defined previously requires that geological age relationships be honored. Looking just at the result, shown in Fig. 15f, this example is equivalent to that in Figs. 14a-c, but the order in which the surfaces were introduced causes significant differences in workload. The processing of the classification of erosional surface 276a-c is depicted piece by piece from Figs. 15c-15f; the actual order in which processing of erosional surface 276a-c occurs is not defined and does not matter for this discussion.

Initially, the embedding of erosional surface 276a-c in layer 272 causes layer 272 to split into two subregions on either side of erosional surface 276a, as shown in Fig. 15c. At this time, the inconsistent region of layer 272 that eventually is going to be eroded, i.e. merged with layer 274, is not completely defined. At the point shown in Fig. 15c, the portion of layer 272 to the right of erosional surface 276a is inconsistent. When erosional surface 276b is classified into layer 270, the portion of layer 270 above erosional surface 276b becomes inconsistent. Only after all of erosional surface 276a-c has been embedded into layers 270 and 272, as shown in Fig. 15e, is the extent of the inconsistent region known. Consequently, the best that can be done during the embedding of erosional surface 276a-c is to record whenever the seed creates an inconsistency in the background. In a second processing step, after all regions are completely defined, an algorithm can be invoked to resolve inconsistencies.

After the classification of erosional surface 276a-c, illustrated in Figs. 15c-e, inconsistent subregions exist within layers 270 and 272 (subregions 278 and 280, respectively). According to the rule, both inconsistent subregions eventually must be merged with layer 274. This has two consequences for the material property assignment in each layer. First, layer 272 is split into layers 282 and 284, illustrated in Fig. 15f, so their properties must be updated accordingly. Second, merging is a pairwise operation. Intermediate property assignments must be generated as intermediate subregions are formed. For example, subregions 278 and 280 could be merged first, and then the result would be merged with layer 274. Alternatively, subregion 280 could be merged with layer 274 first, and then subregion 278 could be merged with the result. Depending on the work to be performed to update material properties after each merge, this can be an expensive computation.

Resolving a background inconsistency is more expensive than resolving a seed inconsistency, because of the larger number of splits and subsequent merges. Editing an existing model leads unavoidably to background inconsistencies, but careful ordering of the sequence in which a model is built can trade costly background inconsistency detection and resolution for cheaper seed inconsistency detection and resolution. In general, it is best to first classify faults, then erosional surfaces, then intrusional surfaces (such as salt domes), and last, horizons.

Classification of a surface or volume against a model can be treated as a rule-based restriction of an ordinary set-theoretic union. As a consequence, an application can define its own family of custom classification operators by defining an appropriate set of rules. For example, rules referring to structural characteristics can be used in conjunction with the union operator to create customized classification operators. For example, one possible implementation of the insert operator can be used to embed a salt body 290 into a model, as shown in Figs. 16a-c.

Assume that a rule specifies that salt body 290 does not have internal boundaries. Unioning of the salt body 290 and the model consisting of layers 292, 294, and 296 and horizons 298a-c and 300a-c yield the result shown in Fig. 16b. During classification of the salt body, background inconsistencies will be detected because pieces of horizons 298a-c and 300a-c get embedded in the salt body and subdivide it, as shown in Fig. 16b. The resolution algorithm associated with the rule will be called which removes horizon cells 298b and 300b from the salt body. The end result is shown in Fig. 16c. The salt body is embedded in the layer sequence, and has no internal structure as required by the rule. Its shape and internal structure are the same as at the beginning of the classification.

Applications can create their own customized topology operators by defining a classification operator as rule-based set-theoretic union. When the resolution of inconsistencies involves pruning of model parts, these operators can be as efficient as built-in classification methods.

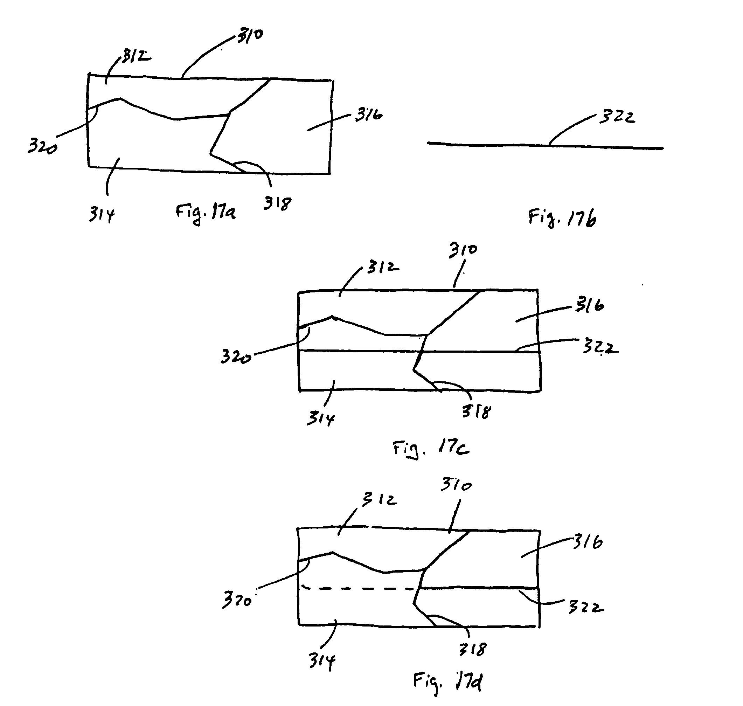

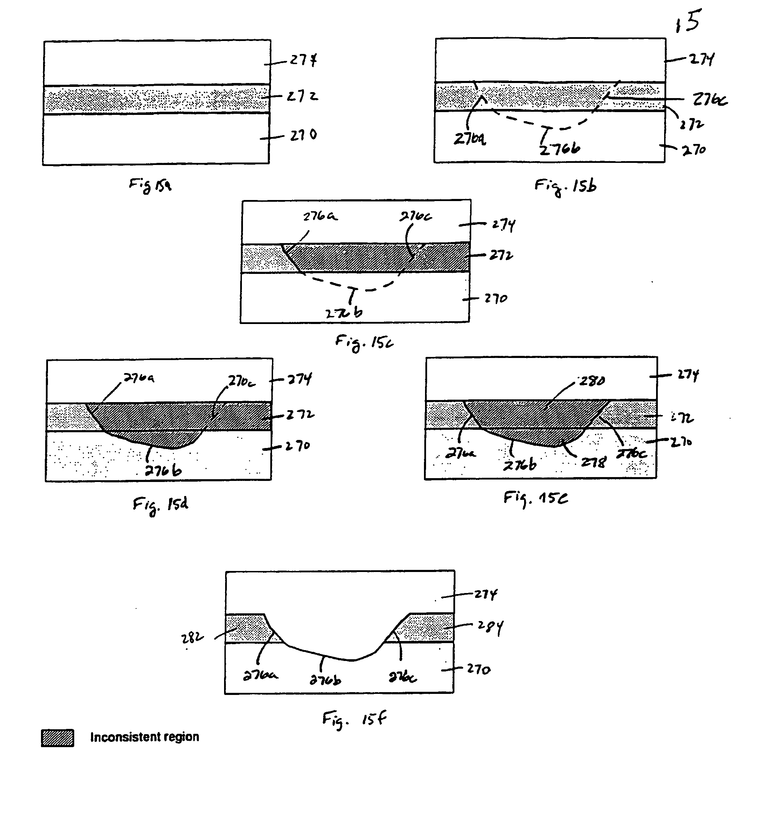

Another example is the rule of focused classification which accounts for the tendency of users to create features that are larger than they need to be. For example, a region 310 may be separated into three fault blocks 312, 314, 316, separated by fault 318 and horizon 320, as shown in Fig. 17a. It is desired to classify into region 310 a new horizon 322, shown in Fig. 17b, which is large enough to extend entirely across region 310. It is the user's intent that the horizon extend only across fault block 316, but, in an effort to make the horizon large enough, the user has made horizon 322 too large. If horizon 322 were classified into the region, it would extend across the entire region, as shown in Fig. 17c.

A focused classification satisfies the following rule, which is implemented by the inconsistency resolution method:

> Focused classification rule (detection): Subvolume subdivision is permitted if and only if the application says so.

> Focused classification rule (resolution):

> Deactivate the region of overlap in the horizon and make no change in the unallowed block.

Applying this rule to the example just discussed, if a horizon 322 overlaps an unallowed fault block 314, as shown in Fig. 17d, the inconsistency resolution method deactivates the portion of the horizon that overlaps the unallowed fault block, illustrated by the dashed portion of horizon 322 in Fig. 17d.

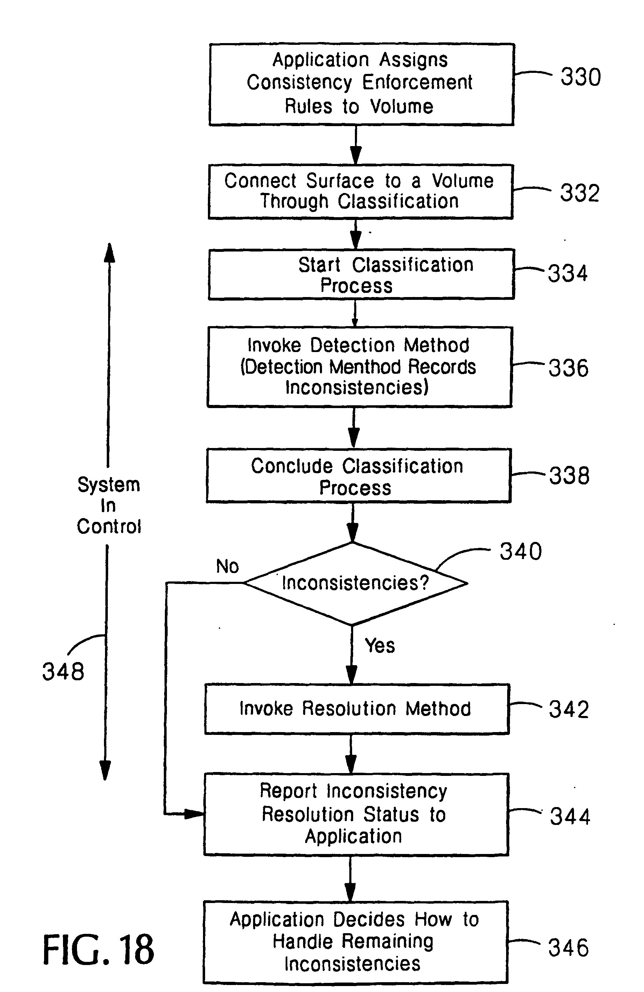

The rules-based system operates as follows: the application assigns consistency enforcement rules to volumes 330, as shown in Fig. 18. When a surface is connected to a volume 332, the system begins the classification process 334. As part of the classification process, a detection method is invoked for each of the callback events spawned by the classification 336. The detection method records the detected inconsistencies. At the conclusion of the classification process 338, the system determines if any inconsistencies were detected during classification 340.

If inconsistencies were detected, a resolution method is invoked for each of the inconsistencies 342. The system then reports to the application the status of the inconsistency resolution methods 344. That is, the system reports what inconsistencies, if any, remain.

The application decides how to handle the remaining inconsistencies 346. The application's processing may include prompting the user for help in resolving the problem or it may simply report the inconsistency to the user.

Inconsistency resolution is under the control of the system from the time that classification begins 334, until all inconsistencies are reported 344, as shown by line 350.

The invention may be implemented in hardware or software, or a combination of both. However, preferably, the invention is implemented in computer programs executing on programmable computers each comprising a processor, a data storage system (including volatile and non-volatile memory and/or storage elements), at least one input device, and at least one output device. Program code is applied to input data to perform the functions described above and generate output information. The output information is applied to one or more output devices, in known fashion.

Each program is preferably implemented in a high level procedural or object oriented programming language (such as C++ or C) to communicate with a computer system. However, the programs can be implemented in assembly or machine language, if desired. In any case, the language may be a complied or interpreted language.

Each such computer program is preferably stored on a storage media or device (*e.g.*, ROM or magnetic/optical disk or diskette) readable by a general or special purpose programmable computer, for configuring and operating the computer when the storage media or device is read by the computer to perform the procedures described herein. The inventive system may also be considered to be implemented as a computer-readable storage medium, configured with a computer program, where the storage medium so configured causes a computer to operate in a specific and predefined manner to perform the functions described herein.

Other embodiments are within the scope of the following claims.

## Claims

1. A method for adjusting geological data representing a geoscience model (12) of the characteristics of a geological region, the geological data comprising one or more features (150, 152, 154), each feature comprising a shape, a topology and one or more attributes, to enforce consistency within the geological data, the method of being implemented in a programmed computer comprising a processor, a data storage system, at least one input device, and at least one output device, the method and the data being stored on a computer-readable media, **characterized by**
    defining one or more detection rules and one or more resolution rules (330) and associating one or more of the detection rules and resolution rules to one or more of the features (150,152,154) wherein there is a correspondence between detection rules and resolution rules;
    adjusting the model;
    detecting an inconsistency by applying the detection rules associated with the one or more of the features (340) impacted by the adjustment of the model; and
    resolving the inconsistency by applying the corresponding resolution rule (342).

2. The method of claim 1, wherein detecting inconsistency comprises
    detecting a potential inconsistency.

3. The method of claim 1, wherein resolving inconsistency comprises
    flagging an inconsistency for alter resolution.

4. The method of claim 1 wherein resolving the inconsistency using the resolution rule comprises
    removing the inconsistency.

5. The method of claim 1 wherein resolving the inconsistency using the resolution rule comprises
    instructing a system responsible for maintaining the geoscience model how to remove the inconsistency.

6. The method of claim 1 wherein resolving the inconsistency using the resolution rule comprises
    reporting the inconsistency to an application.

7. The method of claim 1 wherein defining a detection rule comprises
    defining a correct range of a characteristic of the feature.

8. A computer system for adjusting geological data representing a geoscience model (12) of the characteristics of a geological region, the geological data comprising one or more features (150, 152, 154), each feature comprising a shape, a topology and one or more attributes, to enforce consistency within the geological data, the computer system comprising a processor, a data storage system, at least one input device, and at least one output device, the geological data being stored on a computer-readable media,
**characterized by**
    means for defining one or more detection rules and associating a corresponding resolution rule (330) to each such detection rule and associating one or more detection rules with at least one feature;
    adjusting the model;
    means operable to, for each feature impacted by the
    adjustment, detect an inconsistency by applying the detection rule associated with the one or more impacted features (340); and
    means for resolving the inconsistency by applying the corresponding resolution rule (342).

9. The computer system of claim 8, wherein the detecting inconsistency means comprises means for detecting a potential inconsistency.

10. The computer system of claim 8, wherein the resolving inconsistency means comprises
    means for flagging an inconsistency for later resolution.

11. The computer system of claim 8 wherein the means for resolving the inconsistency by applying the resolution rule comprises
    means for removing the inconsistency.

12. The computer system of claim 8 wherein the means for resolving the inconsistency by applying the resolution rule comprises

means for instructing a system responsible for maintaining the geoscience model how to remove the inconsistency.

13. The computer system of claim 8 wherein the means for resolving the inconsistency by applying the resolution rule comprises

means for reporting the inconsistency to an application.

14. The computer system of claim 8 wherein the means for defining a detection rule comprises

means for defining a correct range of a characteristic of the feature.

15. A computer program, residing on a computer-readable medium, for adjusting geological data representing a geoscience model (12) of the characteristics of a geological region, the geological data comprising one or more features (150, 152, 154), each feature comprising a shape, a topology and one or more attributes, to enforce consistency within the geological data the computer program **characterized by**

instructions for causing the computer, comprising a processor, a data storage system, at least one input device, and at least one output device, to

define at least one detection rule and a resolution rule (330) corresponding to each detection rule;

associate one or more detection rules to at least one feature;

adjusting the model;

detect an inconsistency by applying the detection rule associated with one or more of the features (340) impacted by the adjustment to the model; and

resolve the inconsistency by applying the corresponding resolution rule (342).

16. The computer program of claim 15, wherein the instructions for causing the computer to detect inconsistency comprise

instructions for causing the computer to detect a potential inconsistency.

17. The computer program of claim 15, wherein the instructions for causing the computer to resolve inconsistency comprise

instructions for causing the computer to flag an inconsistency for later resolution.

18. The computer program of claim 15 wherein the instructions for causing the computer to resolve the inconsistency using the resolution rule comprise instructions for causing the computer to

remove the inconsistency.

19. The computer program of claim 15 wherein the instructions for causing the computer to resolve the inconsistency using the resolution rule comprise instructions for causing the computer to

instruct a system responsible for maintaining the geoscience model how to remove the inconsistency.

20. The computer program of claim 15 wherein the instructions for causing the computer to resolve the inconsistency using the resolution rule comprise instructions for causing the computer to

report the inconsistency to an application.

21. The computer program of claim 15 wherein the instructions for causing the computer to define a detection rule comprise instructions for causing the computer to

define a correct range of a characteristic of the feature.

**Patentansprüche**

1. Verfahren zum Einstellen geologischer Daten, die ein geowissenschaftliches Modell (12) der Eigenschaften eines geologischen Bereichs repräsentieren, wobei die geologischen Daten ein oder mehrere Merkmale (150, 152, 154) umfassen, wovon jedes eine Form, eine Topologie und ein oder mehrere Attribute umfasst, um die Konsistenz innerhalb der geologischen Daten zu erhöhen, wobei das Verfahren in einem programmierten Computer implementiert ist, der einen Prozessor, ein Datenspeichersystem, wenigstens eine Eingabevorrichtung und wenigstens eine Ausgabevorrichtung umfasst, wobei das Verfahren und die Daten in einem computerlesbaren Medium gespeichert sind, **gekennzeichnet durch**

Definieren einer oder mehrerer Erfassungsregeln und einer oder mehrerer Auflösungsregeln (330) und Zuordnen einer oder mehrerer der Erfassungsregeln und der Auflösungsregeln zu einem oder mehreren der Merkmale (150, 152, 154), wobei zwischen Erfassungsregeln und Auflösungsregeln eine Korrespondenz besteht;

Einstellen des Modells;

Erfassen einer Inkonsistenz **durch** Anwenden der Erfassungsregeln, die jenem einen oder jenen mehreren Merkmalen (340) zugeordnet sind, die **durch** die Einstellung des Modells beeinflusst werden; und

Auflösen der Inkonsistenz **durch** Anwenden der entsprechenden Auflösungsregel (342).

2. Verfahren nach Anspruch 1, bei dem die Erfassung der Inkonsistenz umfasst:

Erfassen einer möglichen Inkonsistenz.

3. Verfahren nach Anspruch 1, bei dem die Auflösung der Inkonsistenz umfasst:

   Markieren einer Inkonsistenz für eine spätere Auflösung.

4. Verfahren nach Anspruch 1, bei dem die Auflösung der Inkonsistenz unter Verwendung der Auflösungsregel umfasst:

   Beseitigen der Inkonsistenz.

5. Verfahren nach Anspruch 1, bei dem die Auflösung der Inkonsistenz unter Verwendung der Auflösungsregel umfasst:

   Anweisen eines Systems, das für die Wartung des geowissenschaftlichen Modells verantwortlich ist, wie die Inkonsistenz zu beseitigen ist.

6. Verfahren nach Anspruch 1, bei dem die Auflösung der Inkonsistenz unter Verwendung der Auflösungsregel umfasst:

   Melden der Inkonsistenz an eine Anwendung.

7. Verfahren nach Anspruch 1, bei dem das Definieren einer Erfassungsregel umfasst:

   Definieren eines korrekten Bereichs einer Eigenschaft des Merkmals.

8. Computersystem zum Einstellen geologischer Daten, die ein geowissenschaftliches Modell (12) der Eigenschaften eines geologischen Bereichs repräsentieren, wobei die geologischen Daten ein oder mehrere Merkmale (150, 152, 154) umfassen, wovon jedes eine Form, eine Topologie und ein oder mehrere Attribute umfasst, um die Konsistenz innerhalb der geologischen Daten zu erhöhen, wobei das Computersystem einen Prozessor, ein Datenspeichersystem, wenigstens eine Eingabevorrichtung und wenigstens eine Ausgabevorrichtung umfasst, wobei die geologischen Daten in einem computerlesbaren Medium gespeichert sind,
   **gekennzeichnet durch**
   Mittel zum Definieren einer oder mehrerer Erfassungsregeln und Zuordnen einer entsprechenden Auflösungsregel (330) zu jeder solchen Erfassungsregel und Zuordnen einer oder mehrerer Erfassungsregeln zu wenigstens einem Merkmal;
   Einstellen des Modells;
   Mittel, die so betreibbar sind, dass sie für jedes **durch** die Einstellung beeinflusste Merkmal eine Inkonsistenz **durch** Anwenden der dem einen oder den mehreren beeinflussten Merkmalen (340) zugeordneten Erfassungsregel erfassen; und
   Mittel zum Auflösen der Inkonsistenz **durch** Anwenden der entsprechenden Auflösungsregel (342).

9. Computersystem nach Anspruch 8, bei dem die Inkonsistenz-Erfassungsmittel umfassen:

   Mittel zum Erfassen einer möglichen Inkonsistenz.

10. Computersystem nach Anspruch 8, bei dem die Inkonsistenz-Auflösungsmittel umfassen:

   Mittel zum Markieren einer Inkonsistenz für eine spätere Auflösung.

11. Computersystem nach Anspruch 8, bei dem die Mittel zum Auflösen der Inkonsistenz durch Anwenden der Auflösungsregel umfassen:

   Mittel zum Beseitigen der Inkonsistenz.

12. Computersystem nach Anspruch 8, bei dem die Mittel zum Auflösen der Inkonsistenz durch Anwenden der Auflösungsregel umfassen:

   Mittel zum Anweisen eines Systems, das für die Wartung des geowissenschaftlichen Modells verantwortlich ist, wie die Inkonsistenz zu beseitigen ist.

13. Computersystem nach Anspruch 8, bei dem die Mittel zum Auflösen der Inkonsistenz durch Anwenden der Auflösungsregel umfassen:

   Mittel zum Melden der Inkonsistenz an eine Anwendung.

14. Computersystem nach Anspruch 8, bei dem die Mittel zum Definieren einer Erfassungsregel umfassen:

   Mittel zum Definieren eines korrekten Bereichs einer Eigenschaft des Merkmals.

15. Computerprogramm, das in einem computerlesbaren Medium abgelegt ist, um geologische Daten einzustellen, die ein geowissenschaftliches Modell (12) der Eigenschaften eines geologischen Bereichs repräsentieren, wobei die geologischen Daten ein oder mehrere Merkmale (150, 152, 154) umfassen, wovon jedes eine Form, eine Topologie und ein oder mehrere Attribute umfasst, um die Konsistenz innerhalb der geologischen Daten zu erhöhen,
   **gekennzeichnet durch**

Anweisungen, um den Computer, der einen Prozessor, ein Datenspeichersystem, wenigstens eine Eingabevorrichtung und wenigstens eine Ausgabevorrichtung umfasst, dazu zu veranlassen,

wenigstens eine Erfassungsregel und eine jeder Erfassungsregel entsprechende Auflösungsregel (330) zu definieren;

eine oder mehrere Erfassungsregeln wenigstens einem Merkmal zuzuordnen;

das Modell einzustellen;

eine Inkonsistenz **durch** Anwenden der Erfassungsregel, die jenem einen oder jenen mehreren Merkmalen (340) zugeordnet ist, die **durch** die Einstellung des Modells beeinflusst werden, zu erfassen; und

die Inkonsistenz **durch** Anwenden der entsprechenden Auflösungsregel (342) aufzulösen.

16. Computerprogramm nach Anspruch 15, bei der die Anweisungen, die den Computer dazu veranlassen, eine Inkonsistenz zu erfassen, umfassen:

Anweisungen, die den Computer dazu veranlassen, eine mögliche Inkonsistenz zu erfassen.

17. Computerprogramm nach Anspruch 15, bei dem die Anweisungen, die den Computer dazu veranlassen, die Inkonsistenz aufzulösen, umfassen:

Anweisungen, die den Computer dazu veranlassen, eine Inkonsistenz für eine spätere Auflösung zu markieren.

18. Computerprogramm nach Anspruch 15, bei dem die Anweisungen, die den Computer dazu veranlassen, die Inkonsistenz unter Verwendung der Auflösungsregel aufzulösen, Anweisungen umfassen, die den Computer dazu veranlassen,

die Inkonsistenz zu beseitigen.

19. Computerprogramm nach Anspruch 15, bei dem die Anweisungen, die den Computer dazu veranlassen, die Inkonsistenz unter Verwendung der Auflösungsregel aufzulösen, Anweisungen umfassen, die den Computer dazu veranlassen,

ein System, das für die Wartung des geowissenschaftlichen Modells verantwortlich ist, anzuweisen, wie die Inkonsistenz zu beseitigen ist.

20. Computerprogramm nach Anspruch 15, bei dem die Anweisungen, die den Computer dazu veranlassen, die Inkonsistenz unter Verwendung der Auflösungsregel aufzulösen, Anweisungen umfassen, die den Computer dazu veranlassen,

die Inkonsistenz an eine Anwendung zu melden.

21. Computerprogramm nach Anspruch 15, bei dem die Anweisungen, die den Computer dazu veranlassen, eine Erfassungsregel zu definieren, Anweisungen umfassen, die den Computer dazu veranlassen,

einen korrekten Bereich einer Eigenschaft des Merkmals zu definieren.

## Revendications

1. Procédé d'ajustement de données géologiques représentant un modèle géoscientifique (12) des caractéristiques d'une région géologique, les données géologiques comprenant un ou plusieurs éléments (150, 152, 154), chaque élément comprenant une forme, une topologie et un ou plusieurs attributs, pour renforcer la cohérence dans les données géologiques, le procédé étant mis en oeuvre dans un ordinateur programmé comprenant un processeur, un système de stockage des données, au moins un dispositif d'entrée, et au moins un dispositif de sortie, le procédé et les données étant stockés sur un support lisible informatiquement, **caractérisé par**

la définition d'une ou plusieurs règles de détection et d'une ou plusieurs règles de résolution (330) et l'association d'une ou plusieurs des règles de détection et des règles de résolution à l'un ou plusieurs des éléments (150, 152, 154) dans laquelle il existe une correspondance entre les règles de détection et les règles de résolution ;

l'ajustement du modèle ;

la détection d'une incohérence en appliquant les règles de détection associées à l'un ou plusieurs des éléments (340) impactés par l'ajustement du modèle ; et

la résolution de l'incohérence en appliquant la règle de résolution correspondante (342).

2. Procédé selon la revendication 1, dans lequel la détection d'incohérence comprend

la détection d'une incohérence potentielle.

3. Procédé selon la revendication 1, dans lequel la résolution d'incohérence comprend

la signalisation d'une incohérence pour modifier la résolution.

4. Procédé selon la revendication 1, dans lequel la résolution de l'incohérence à l'aide de la règle de résolution comprend

la suppression de l'incohérence.

5. Procédé selon la revendication 1, dans lequel la résolution de l'incohérence à l'aide de la règle de résolution comprend

l'instruction d'un système chargé du maintien du modèle géoscientifique concernant la procédure de suppression de l'incohérence.

6. Procédé selon la revendication 1, dans lequel la résolution de l'incohérence à l'aide de la règle de résolution comprend

le report de l'incohérence à une application.

7. Procédé selon la revendication 1, dans lequel la définition d'une règle de résolution comprend

la définition d'une plage correcte d'une caractéristique de l'élément.

8. Système informatique pour l'ajustement de données géologiques représentant un modèle géoscientifique (12) des caractéristiques d'une région géologique, les données géologiques comprenant un ou plusieurs éléments (150, 152, 154), chaque élément comprenant une forme, une topologie et un ou plusieurs attributs, pour renforcer la cohérence dans les données géologiques, le système informatique comprenant un processeur, un système de stockage des données, au moins un dispositif d'entrée, et au moins un dispositif de sortie, les données géologiques étant stockées sur un support lisible informatiquement, **caractérisé par**

des moyens de définition d'une ou plusieurs règles de détection et d'association d'une règle de résolution correspondante (330) pour chaque telle règle de détection et d'association d'une ou plusieurs règles de détection à au moins un élément ;

l'ajustement du modèle ;

des moyens utilisables pour chaque élément impacté par l'ajustement, pour détecter une incohérence en appliquant la règle de détection associée à l'élément ou aux éléments impactés (340) ; et

des moyens de résolution de l'incohérence en appliquant la règle de résolution correspondante (342).

9. Système informatique selon la revendication 8, dans lequel les moyens de détection d'incohérence comprennent des moyens de détection d'une incohérence potentielle.

10. Système informatique selon la revendication 8 dans lequel les moyens de résolution d'incohérence comprennent

des moyens de signalisation d'une incohérence en vue de sa résolution ultérieure.

11. Système informatique selon la revendication 8 dans lequel les moyens de résolution de l'incohérence en appliquant la règle de résolution comprennent

des moyens de suppression de l'incohérence.

12. Système informatique selon la revendication 8 dans lequel les moyens de résolution de l'incohérence en appliquant la règle de résolution comprennent

des moyens d'instruction d'un système chargé du maintien du modèle géoscientifique concernant la procédure de suppression de l'incohérence.

13. Système informatique selon la revendication 8 dans lequel les moyens de résolution de l'incohérence en appliquant la règle de résolution comprennent

des moyens de report de l'incohérence à une application.

14. Système informatique selon la revendication 8 dans lequel les moyens de définition d'une règle de détection comprennent

des moyens de définition d'une plage correcte d'une caractéristique de l'élément.

15. Programme informatique, résidant dans un support lisible informatiquement, pour l'ajustement de données géologiques représentant un modèle géoscientifique (12) des caractéristiques d'une région géologique, les données géologiques comprenant un ou plusieurs éléments (150, 152, 154), chaque élément comprenant une forme, une topologie et un ou plusieurs attributs, pour renforcer la cohérence dans les données géologiques, le programme informatique **caractérisé par**

des instructions destinées à amener l'ordinateur, comprenant un processeur, un système de stockage de données, au moins un dispositif d'entrée, et au moins un dispositif de sortie, à

définir au moins une règle de détection et une règle de résolution (330) correspondant à chaque règle de détection ;

associer au moins une règle de détection à au moins un élément ;

ajuster le modèle ;

détecter une incohérence en appliquant la règle de détection associée à l'élément ou aux éléments (340) impactés par l'ajustement sur le modèle ; et

résoudre l'incohérence en appliquant la règle de résolution correspondante (342).

16. Programme informatique selon la revendication 15, dans lequel les instructions destinées à amener l'ordinateur à détecter l'incohérence comprennent

des instructions destinées à amener l'ordinateur à détecter une incohérence potentielle.

17. Système informatique selon la revendication 15, dans lequel les instructions destinées à amener l'ordinateur à résoudre l'incohérence comprennent

des instructions destinées à amener l'ordinateur à signaler une incohérence pour une résolution ultérieure.

18. Programme informatique selon la revendication 15, dans lequel les instructions destinées à amener l'ordinateur à résoudre l'incohérence à l'aide de la règle de résolution comprennent des instructions destinées à amener l'ordinateur à

supprimer l'incohérence.

19. Programme informatique selon la revendication 15, dans lequel les instructions destinées à amener l'ordinateur à résoudre l'incohérence à l'aide de la règle de résolution comprennent des instructions destinées à amener l'ordinateur à

instruire un système chargé du maintien du modèle géoscientifique concernant la procédure de suppression de l'incohérence.

20. Programme informatique selon la revendication 15, dans lequel les instructions destinées à amener l'ordinateur à résoudre l'incohérence à l'aide de la règle de résolution comprennent des instructions destinées à amener l'ordinateur à

reporter l'incohérence à une application.

21. Programme informatique selon la revendication 15, dans lequel les instructions destinées à amener l'ordinateur à définir une règle de détection comprennent des instructions destinées à amener l'ordinateur à

définir une plage correcte d'une caractéristique de l'élément.

Fig. 1

FIG. 2a

FIG. 2b

FIG. 2c

Fig. 3b

Fig. 3a

Fig. 3c

Fig. 4a

Fig 4b

Fig 4c

Fig. 5a

Fig. 5b

Fig. 5c

132

(+)

130

(-)

134

Fig. 6a

136

Fig. 6b

136

138

130

140

Fig. 6c

FIG. 7a

FIG. 7b

FIG. 7c

FIG. 8a

FIG. 8b

FIG. 8c

FIG. 8d

FIG. 8e

Fig. 9a

Fig. 9b

Fig. 10a

Fig. 10b

Fig. 11a

Fig. 11b

FIG. 12a

FIG. 12b

246b

246a

Fig. 13a

250

248

246a

246b

252

254

Fig. 13b

Fig. 14a

Fig. 14b

Fig. 14c

292
298c
294
300c
290
296

298a 298b
300a 300b

Fig 16a

292
294
296

298a 298b 298c
300a 300b 300c
290

Fig 16b

292
294
296

298a 298c
300a 300c
290

Fig 16c

Fig. 17a

Fig. 17b

Fig. 17c

Fig. 17d

EP 1 070 267 B1

Fig 15a

Fig. 15b

Fig. 15c

Fig. 15d

Fig. 15e

Fig. 15f

Inconsistent region

FIG. 18

Application Assigns Consistency Enforcement Rules to Volume — 330

Connect Surface to a Volume Through Classification — 332

Start Classification Process — 334

Invoke Detection Method (Detection Menthod Records Inconsistencies) — 336

Conclude Classification Process — 338

Inconsistencies? — 340

No

348

System In Control

Yes

Invoke Resolution Method — 342

Report Inconsistency Resolution Status to Application — 344

Application Decides How to Handle Remaining Inconsistencies — 346